# EUROPÄISCHE PATENTSCHRIFT

(11) **EP 1 618 708 B1**
(45) Veröffentlichungstag und Bekanntmachung des Hinweises auf die Patenterteilung: **13.12.2006**
(21) Anmeldenummer: 04717613.6
(22) Anmeldetag: 05.03.2004
(51) Int. Cl.: H04L 12/46

(54) **VERFAHREN ZUR AUTOMATISCHEN KONFIGURATION EINER KOMMUNIKATIONSEINRICHTUNG**
METHOD FOR THE AUTOMATIC CONFIGURATION OF A COMMUNICATIONS DEVICE
PROCEDE POUR LA CONFIGURATION AUTOMATIQUE D'UN DISPOSITIF DE COMMUNICATION

(30) Priorität: 29.04.2003 DE 10319323
(43) Veröffentlichungstag der Anmeldung: 25.01.2006
(73) Patentinhaber: SIEMENS AKTIENGESELLSCHAFT, 80333 München (DE)
(72) Erfinder: ACKERMANN-MARKES, Achim, Wörthsee 82237 (DE); VEITS, Oliver, 85221 Dachau (DE)
(86) Internationale Anmeldenummer: PCT/EP2004/002265
(87) Internationale Veröffentlichungsnummer: WO 2004/098130

(56) Entgegenhaltungen:
- EP-A- 0 889 624
- US-B1- 6 434 624
- US-B1- 6 507 564

## Beschreibung

Die Erfindung betrifft ein Verfahren zur automatischen Konfiguration von Kommunikationseinrichtungen in logischen Netzwerkbereichen.

Zur logischen Segmentierung von paketorientierten Netzwerken - in der Fachwelt oftmals auch mit "LAN", Local Area Network benannt - ist eine Organisationsform eines sogenannten virtuellen LAN bekannt.

Ein virtuelles LAN bzw. VLAN wird durch eine Gruppe von Netzknoten gebildet, die in einer autonomen Domäne bzw. "Broadcast Domain" zusammengefasst sind. Die Zugehörigkeit eines Netzknotens zu einem VLAN hängt nicht von der örtlichen Lage des Netzknotens ab. Sie ist ausschließlich durch Softwarekonfiguration bestimmt und kann geändert werden, wenn ein Netzknoten einer neuen Arbeitsgruppe zugeordnet werden soll.

Soll ein virtuelles LAN über mehrere Netzknoteneinrichtungen ausgedehnt werden, so ist eine Erweiterung der in ausgetauschten Datenpaketen Ziel und Ursprung identifizierenden MAC-Adressen ("Media Access Control") um eine Identifikationsnummer des virtuellen LANs vorteilhaft. Diese Identifikationsnummer wird meist als VLAN-Nummer bzw. "VLAN ID" bzw. "Virtual LAN Identification Number" bezeichnet.

Mit einem als "Frame Tagging" bezeichneten Verfahren wird eine das VLAN kennzeichnende VLAN ID als sogenannter "Tag" (Markierung) hinter das Typ-Feld des MAC-Pakets gesetzt. Dieses Verfahren ist in IEEE 802.1Q standardisiert und verwendet eine Wortbreite für den Tag von 12 Bit. Daraus ergeben sich theoretisch für die VLAN ID die Werte 0 bis 4095. In 802.1Q-Netzwerken sind aus Kompatibilitätsgründen weiterhin markierungsfreie MAC-Pakete austauschbar. Diesen markierungsfreien MAC-Paketen wird eine VLAN ID mit einem Wert zwischen 1 und 4095 zugewiesen. Markierungsfreie MAC-Pakete sind einem sogenannten "nativen VLAN" zugeordnet. Daneben sind mit einer VLAN ID des Wertes 0 (Null) markierte Datenpakete ebenfalls diesem nativen VLAN zuzuordnen. In dieser Beschreibung umfassen die Begriffe "Markierung" und "Identifikationsnummer" sowohl die Fälle von Markierungen mit VLAN ID Werten zwischen 0 bis 4095 als auch die gleichberechtigte Möglichkeit, dass ein MAC-Paket unmarkiert ist.

Eine Ausführungsform eines virtuellen LANs ist das sogenannte portbasierte VLAN. Dabei werden innerhalb eines IP-Subnetzes ("Internet Protocol") oder auch über mehrere IP-Subnetze ein VLAN gespannt und auf mehrere Anschlüsse ("Port") einer Netzknoteneinrichtung abgebildet. Die Netzknoteneinrichtung ist üblicherweise als sogenannter "Switch" ausgebildet, die Abbildung auf Anschlüsse dieses Switches wird auch als "Switchport Mapping" bezeichnet.

Ein Einsatz eines virtuellen LANs ist im Anschluss von paketorientiert kommunizierenden Telephoniekomponenten an ein VoIP-Kommunikationsnetz ("Voice over IP") gegeben. Eine Kommunikationseinrichtung - beispielsweise ein VoIP-Telephon - mit einer vorgegebenen VVID ("Voice VLAN ID") ist üblicherweise an den Switch angeschlossen. Mit der Bezeichnung "Voice VLAN ID" ist bereits angedeutet, dass ein dieser VLAN ID zugeordnetes VLAN überwiegend einem Anschluss von Telephoniekomponenten vorbehalten ist.

Im übrigen ist der Anschluss an einen Switch nicht zwingend notwendig für die Einrichtung eines VLANs. Statt portbasierter virtueller LANs sind auch VLANs ohne einen zugeordneten Switch denkbar.

Eine einem VLAN zugeordnete Kommunikationseinrichtung kann ihrerseits einen - z.B. intern angeordneten - Switch enthalten. Dieser interne Switch dient zum Anschluss eines Rechnersystems an die Kommunikationseinrichtung, um einen Datenaustausch sowohl von datenverarbeitenden Diensten als auch von Kommunikationsdiensten mit einer gemeinsamen Datenleitung zu gewährleisten. Auf eine solche Anordnung wird daher oftmals auch mit dem Begriff "Single Wire to Desk" Bezug genommen.

Während die Kommunikationseinrichtung üblicherweise über anhand einer Identifikationsnummer (VVID) markierten Datenpakete - "Tagged Frames" - kommuniziert, verwendet das daran angeschlossene Rechnersystem üblicherweise "Untagged Frames", d.h. Datenpakete, die keine Identifikationsnummer (VVID bzw. VLAN ID) enthalten.

Im folgenden wird von einer üblichen Portkonfiguration des Switch ausgegangen, in der lediglich unmarkierte Datenpakete sowie markierte Datenpakete mit der nur für diesen Port vorgesehenen VVID weitergeleitet werden. Für eine Inbetriebnahme der Kommunikationseinrichtung ist diese z.B. an einen Port des Switch anzuschließen. Die dem VLAN zugeordnete - beispielsweise für diesen Port vorgesehene - VVID ist in der Kommunikationseinrichtung zu konfigurieren, da der Switch jedes Datenpaket verwirft, das nicht die für den angeschlossenen Port vorgesehene VVID enthält. Datenpakete ohne einen eine WID enthaltenden Tag sind der Datenkommunikation mit der Recheneinheit vorbehalten und passieren den Switch ebenfalls.

Die Konfiguration der VVID an jedem der Kommunikationseinrichtungen in einem Kommunikationssystem ist bei einer erstmaligen Inbetriebsetzung einer Vielzahl von Kommunikationseinrichtungen eine zeitraubende Maßnahme. Des weiteren ist diese Konfiguration bei jedem Umzug der Kommunikationseinrichtung an einen anderen Anschlussort neu vonnöten, da jeder Anschlussdose im Allgemeinen ein anderer Switchport mit einer jeweils unterschiedlichen VVID zugeordnet ist. Die manuelle Konfiguration ist ein aufwändiger Vorgang, der mit einem hohen Personaleinsatz und Zeitaufwand verbunden ist. Für eine rationellere Inbetriebnahme ist daher eine automatische Konfiguration der VVID von Kommunikationseinrichtungen bzw. der VLAN ID von paketorientiert kommunizierenden Endgeräten in einem portbasierten virtuellen LAN anzustreben.

Aus der US-amerikanischen Veröffentlichungsschrift US 2002/0003801 A1 ist bereits ein Verfahren für eine automatisierte Konfiguration einer VLAN ID in einem virtuellen LAN bekannt. Ein mit einem Switch verbundener Kommunikationsendpunkt sendet eine mit einer ausgewählten VLAN ID markierte Bestätigungsnachricht an den Switch und wartet auf eine Antwortnachricht. Trifft keine Antwortnachricht vom Switch ein, wird die ausgewählte VLAN ID als ungültig markiert und der Vorgang mit einer anderen VLAN ID wiederholt, bis auf eine derartige Bestätigungsnachricht eine Antwortnachricht vom Switch eintrifft. Die für die Bestätigungsnachricht gewählte VLAN ID wird für dieses portbasierte VLAN als gültig vermerkt und der Kommunikationsendpunkt mit dieser VLAN ID konfiguriert. Zur Auswahl einer zu prüfenden VLAN ID durch den Kommunikationsendpunkt werden Informationen in GVRP-Nachrichten ("GARP VLAN Registration Protocol" wobei GARP für "Generic Attribute Registration Protocol" steht) verwendet, welche in periodischen Zeitabständen vom Switch an alle daran angeschlossene Endpunkte gesandt werden. Diese GVRP-Nachrichten enthalten die VLAN IDs sämtlicher an den Switch angeschlossener Kommunikationsendpunkte. Die US-amerikanische Veröffentlichungsschrift US-6 434 624 beschreibt ein Verfahren für eine automatisierte Konfiguration von Adressen einer Kommunikationseinrichtung in einem Kommunikationsnetz.

Das Verfahren weist insbesondere den Nachteil auf, dass hierbei der Switch mit einer Steuerlogik zur Handhabung von GVRP-Nachrichten ausgestaltet sein muss. Ein weiterer Nachteil besteht in einem gesteigerten Datenaustausch durch eine Notwendigkeit eines "Durchprobierens" verschiedener VLAN IDs während der Konfigurationsphase.

Aufgabe der Erfindung ist es, Mittel für eine automatisierte Konfiguration von Kommunikationseinrichtungen in einem virtuellen paketorientierten Netzwerk bereitzustellen, bei deren Anwendung die oben genannten Nachteile vermieden werden.

Eine Lösung der Aufgabe erfolgt durch ein Verfahren mit den Merkmalen des Patentanspruchs 1.

Erfindungsgemäß erfolgt eine Übersendung einer Konfigurationsnachricht von einem außerhalb eines Subnetzwerks lokalisierten Netzelement. Das Subnetzwerk ist beispielsweise als Domäne innerhalb eines paketorientierten Netzwerks, beispielsweise eines "Local Area Networks", LAN, zu verstehen. Das Netzelement liegt z.B. als eigenständige Servereinheit vor, oder auch in Form eines ablauffähigen Prozesses auf einer beliebig lokalisierten, kommunizierenden Einheit. Die Kommunikationseinrichtung ist einem virtuellen Netzwerk zugeordnet. Das virtuelle Netzwerk erstreckt sich dabei zumindest teilweise innerhalb des Subnetzwerks und kann sich demnach alternativ auch über mehrere Subnetzwerke erstrecken. Die Konfigurationsnachricht wird zunächst an eine das Subnetzwerk verwaltende Netzknoteneinrichtung - üblicherweise ein sogenannter Ebene-3-Switch bzw. Router - gesendet. Als Zieladresse dieser Konfigurationsnachricht wird dabei die Netzwerkadresse des Subnetzwerks eingetragen. Diese Netzwerkadresse wird z.B. in einem "Directed Broadcast"-Format eingetragen. Durch die in der Konfigurationsnachricht als Ziel eingetragene Netzwerkadresse des von der Netzknoteneinrichtung verwalteten Subnetzwerks wird die Netzknoteneinrichtung angewiesen, diese in Form einer Rundrufnachricht bzw. "Broadcastnachricht" an das virtuelle Netzwerk zu senden, wobei auf sogenannten, im weiteren näher erläuterten 802.1Q-Trunks bei einer Weiterleitung der Konfigurationsnachricht als Rundrufnachricht an ein virtuelles Netzwerk durch den Router oder Switch die Rundrufnachricht mit der für das virtuelle Netzwerk vorgesehenen Identifikationsnummer ergänzt wird, wenn die VVID nicht mit einer in IEEE 802.1Q definierten sogenannten "nativen" VLAN des Trunks übereinstimmt. Die Rundrufnachricht wird von der Kommunikationseinrichtung empfangen und bearbeitet. Bei dieser Bearbeitung wird die mitgesandte Identifikationsnummer ausgelesen, und die Kommunikationseinrichtung mit dieser konfiguriert.

Ein wesentlicher Vorteil des erfindungsgemäßen Verfahrens ist darin zu sehen, dass für die bestehende Netzknoteneinrichtung zur Anwendung des erfindungsgemäßen Verfahrens keine zusätzlichen Aufgaben bzw. Bearbeitungsschritte notwendig sind. Die Verfahrensschritte einer Umsetzung der Konfigurationsnachricht in eine Rundrufnachricht sowie das Einsetzen einer Identifikationsnummer zählen zu den gängigen Bearbeitungsschritten derartiger, beispielsweise als Router ausgestalteter Netzknoteneinrichtungen.

Ein Vorteil des erfindungsgemäßen Verfahrens besteht weiterhin in einer zentralen Stelle zur Verwaltung des Inhalts von Konfigurationsnachrichten bzw. zur Übermittlung dieser Konfigurationsnachrichten. Die Konfigurationsnachrichten selbst müssen hierbei nicht in den Subnetzwerken oder virtuellen Netzwerken generiert werden, sondern können über das ganze paketorientierte Netzwerk unter Beteiligung weiterer Router an die Netzknoteneinrichtung und schließlich an die Kommunikationseinrichtung durchgestellt werden.

Ein weiterer Vorteil des erfindungsgemäßen Verfahrens ist darin zu sehen, dass für eine automatische Konfiguration aller Kommunikationseinrichtungen eines VLAN lediglich eine einzelne Konfigurationsnachricht erforderlich ist. Für das Netzwerk belastender Verkehr in Folge von Anfragenachrichten und Antwortnachrichten für jede Kommunikationseinrichtung erübrigt sich damit.

Ein weiterer Vorteil des erfindungsgemäßen Verfahrens ergibt sich bei der anfänglichen Installation aller Kommunikationsendgeräte beim Aufbau eines neuen Kommunikationssystems. Das erfindungsgemäße Verfahren gewährleistet eine Konfiguration jedes Endgeräts ohne neben einer Montage der Geräte einen manuellen Zugriff erforderlich zu machen.

Vorteilhafte Weiterbildungen der Erfindung sind in den Unteransprüchen angegeben.

Vorteilig erfolgt die Adressierung durch die Netzwerkadresse in Form einer Directed Broadcast-Netzwerkadresse. Diese Maßnahme gewährleistet eine ökonomische Datenverwaltung in der Zuordnung von Netzwerkadressen zu zugehörigen virtuellen Netzwerken. Da mehrere Subnetzwerke verwaltende Netzknoteneinrichtungen als Empfänger einer "Directed Broadcast"-Nachricht diese vor Weiterleitung in das angewiesene ("Directed") virtuelle Netzwerk jeweils mit einer vorbehaltenen Identifikationsnummer markieren - bzw. unmarkiert belassen, wenn eine vorhandene VLAN ID mit dem in 802.1Q definierten Port VLAN ID übereinstimmt - und als Broadcast-Meldung in diesen Bereich weiterleiten, ist die eindeutige Adressierung der zu übermittelnden Identifikationsnummer gewährleistet.

Eine vorteilhafte Ausgestaltung der Erfindung sieht eine zwischen der Netzknoteneinrichtung und dem virtuellen Netzwerk angeordnete Ebene-2-Netzknoteneinrichtung bzw. "Switch" vor. Genauer gesagt ist dieser Switch ebenfalls Bestandteil eines derart definierten virtuellen Netzwerks. Ein Vorteil dieses Switch ist die Gewährleistung einer definierten Übergabeschnittstelle, durch welche das virtuelle Netzwerk gesammelt über einen dedizierten Router-Uplink mit dem gesamt Netzwerk verbunden ist in Verbindung mit einer Topologisierung der Teilnehmerstrukturen. In vorteilhafter Weise sind an einen standardisierten Switch zur Ausführung des erfindungsgemäßen Verfahrens keinerlei Anforderungen zu stellen, insbesondere müssen auf diesem keine speziellen Abarbeitungsschritte definiert werden.

In einer bevorzugten Ausführungsform wird für ein Kommunikationsendgerät sowie für eine verbundene Recheneinheit in einem IP-Subnetzwerk je ein VLAN gespannt und auf jeweils genau einen Anschluss des Switch ("Port" bzw. "Switchport") abgebildet ("mapped"). Die Uplink Ports zwischen den Switches und zum Routerinterface werden als sogenannter Q-Trunk definiert, so dass jeder Datenverkehr, der sich nicht auf das IP-Subnetzwerk eines Teilnehmers beschränkt, den Router passieren muss. Als "Trunk"-Verbindung wird eine Verbindung zwischen 802.1Q-fähigen Netzelemente bezeichnet, d.h. Geräten, die das VLAN-Paketformat verstehen und welche die Markierung "Tag" eines Pakets auslesen können. Ein derartiger Trunk ermöglicht ein Multiplexing mehrerer VLANs zwischen mehreren VLAN-Netzelementen.

Vorteilhaft passieren diesen Switch nur Datenpakete, welche eine vorgesehene Identifikationsnummer (VLAN ID bzw. VVID) in einem Markierungsteil "Tag" eines 802.1Q-Kennzeichnungsteils ("Header") enthalten.

In einer weiteren vorteiligen Ausgestaltung der Erfindung weist die Netzknoteneinrichtung (Switch) mehrere Anschlusseinheiten (Ports) auf, wobei jedem Port jeweils ein virtuelles Netzwerk mit einer Identifikationsnummer bzw. VLAN ID gemäß eines sogenannten "Switchport Mapping" zugeordnet ist.

Ein Ausführungsbeispiel mit weiteren Vorteilen und Ausgestaltungen der Erfindung wird im folgenden anhand der Zeichnung näher erläutert.

Dabei zeigen:
- Fig. 1A:: ein Strukturbild zur schematischen Darstellung einer Anordnung eines Rechensystems und einer Kommunikationseinheit;
- Fig. 1B:: ein Strukturbild zur schematischen Darstellung einer Anschaltung eines Rechensystems und einer Kommunikationseinheit an einen Switch; und
- Fig. 2:: ein Strukturbild zur schematischen Darstellung eines paketorientierten Netzwerks.

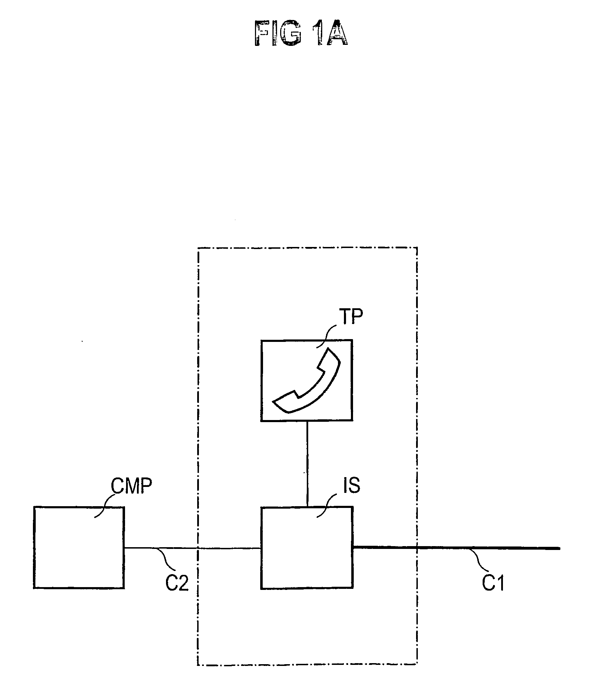

Fig. 1A zeigt eine Kommunikationseinrichtung TF, welche z.B. als VoIP-Telephon ("Voice over Internet Protocol") TP ausgeführt ist. Ein interner Switch IS ist der Kommunikationseinrichtung TF zugeordnet oder auch - versinnbildlicht durch eine strichpunktierten Kasten - Bestandteil dieser Kommunikationseinrichtung TP. Ein vom bzw. zum internen Switch IS hin- bzw. wegführende erste Verbindung C1 ist in der Zeichnung mit einer größeren Strichbreite dargestellt um zu veranschaulichen, dass die bidirektionale Datenleitung dieser ersten Verbindung C1 sowohl den Datenverkehr für die Kommunikationseinrichtung TP als auch für ein Rechensystem CMP transportiert. Aufgrund dieser Tatsache wird die zweite Verbindung C1 oftmals auch als Bündelleitung bzw. "Trunk" bezeichnet. Die Kommunikationseinrichtung TP ist mit einer zweiten Verbindung C2 - beispielsweise über den internen Switch IS - mit dem Rechensystem CMP verbunden.

Im folgenden wird unter weiterer Bezugnahme auf die Funktionseinheiten der jeweils vorausgehenden Figuren das erfin-, dungsgemäße Verfahren näher erläutert.

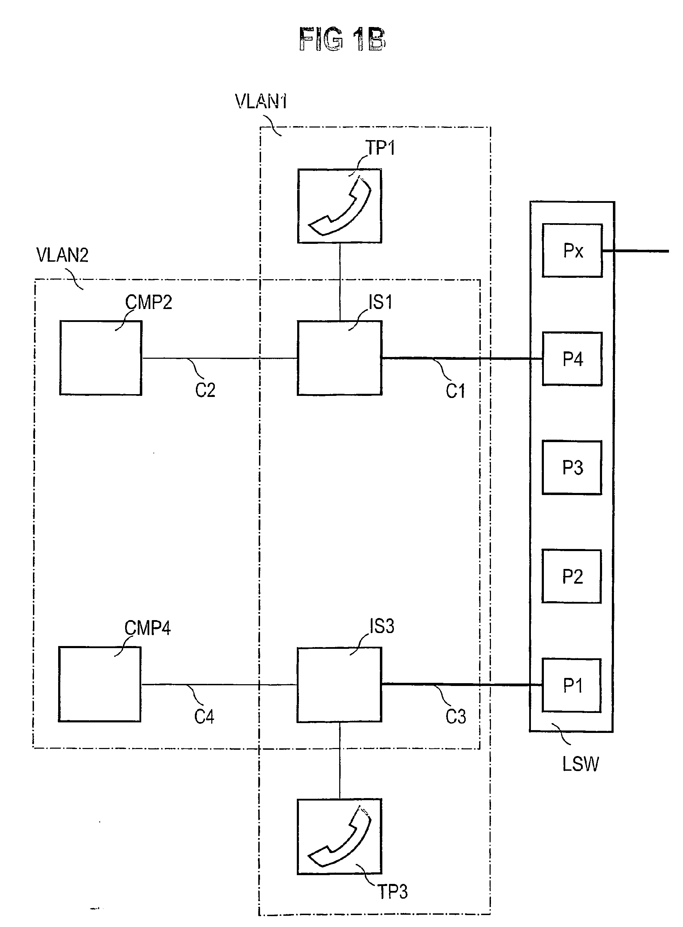

Fig. 1B zeigt eine erste Kommunikationseinrichtung TP1 mit einem zugeordneten internen Switch IS1, welcher über eine Verbindung C2 mit einem Rechnersystem Rechensystem CMP2 verbunden ist. Die Kommunikationseinrichtung TP1 ist über ihren internen Switch IS1 mit einem Port P4 eines Switch LSW mittels einer Verbindung C1 verbunden.

Eine weitere Kommunikationseinrichtung TP3 mit einem zugeordneten internen Switch IS3 ist über eine Verbindung C4 mit einem weiteren Rechensystem CMP4 verbunden. Die weitere Kommunikationseinrichtung TP3 ist über ihren internen Switch IS3 mit einem weiteren Port P1 des Switch LSW verbunden.

Der Switch LSW enthält mehrere Anschlusseinheiten bzw. Ports, von denen in der Zeichnung ein erster Port P1, ein zweiter Port P2, ein dritter Port P3 und ein vierter Port P4 dargestellt sind. Ein weiterer Port Px dient beispielsweise zum Anschluss des Switch an eine - nicht dargestellte - Netzknoteneinrichtung wie beispielsweise einem weiteren Switch oder einem Router. In den weiteren Ausführung zur Figurenbeschreibung anhand von Fig. 1B wird lediglich eine Beschaltung des ersten und des vierten Ports P1,P4 betrachtet. Weitere Ports P2,P3,Px des Switch LSW sind wahlweise mit weiteren - nicht dargestellten - Netzelementen verbunden. Eine an den Port Px angeschlossene Trunkverbindung ist in der Zeichnung lediglich angedeutet.

Ein erstes virtuelle Netzwerk VLAN1 umfasst die beiden Kommunikationsendgeräte TP1,TP3 und deren jeweils zugeordneten internen Switch IS1,IS3. Das zweite virtuelle Netzwerk VLAN2 umfasst die beiden Recheneinheiten CMP2 und CMP4 sowie den den beiden Kommunikationsendgeräte TP1,TP3 jeweils zugeordneten internen Switch IS1,IS3. Die beiden virtuellen Netzwerke VLAN1,VLAN2 umfassen im weiteren den Switch LSW sowie weitere - nicht dargestellte - Netzelemente, welche beispielsweise mit dem Port Px verbunden sind. Aus Übersichtsgründen wurde eine Zugehörigkeit des Switch LSW sowie weiterer Netzelemente zum jeweiligen virtuellen Netzwerk VLAN1,VLAN2 in Fig. 1B nicht zeichnerisch dargestellt.

Weiterhin sei aus Gründen der Übersichtlichkeit angenommen, dass sich im Ausführungsbeispiel das erste virtuelle Netzwerk VLAN1 mit einem ersten Subnetzwerk, das zweite virtuelle Netzwerk VLAN2 mit einem zweiten Subnetzwerk überdeckt. In technischen Verwirklichungen ist fallweise auch eine Erstreckung der virtuellen Netzwerke VLAN1,VLAN2 über mehrere Subnetzwerke durchführbar.

Ein Subnetzwerk definiert einen Bereich innerhalb eines größeren Netzwerkbereichs. Die Adressierung eines Subnetzwerkes durch eine IP-Adresse ("Internet Protocol") erfolgt mit Hilfe einer Subnetzmaske bzw. "Subnet-Mask". Diese gibt an, bis zum wievielten Bit einer IP-Adresse der Netzwerkanteil reicht, die weiteren Bits der IP-Adresse charakterisieren einen sogenannten Hostanteil. Der Netzwerkanteil bezeichnet das Netz, das zu adressieren ist, der Hostanteil adressiert den Host in diesem Netz. Eine IP-Adresse wird beispielsweise mittels einer 32-stelligen Dualzahl angegeben. Aufgrund einer leichteren Übersichtlichkeit teilt man diese Dualzahl in vier Oktette zu je acht Bits, als Trennzeichen wird der Punkt verwendet. Jedes Viertel kann nun noch in eine Dezimalzahl umgewandelt werden, dabei sind Werte zwischen 0 und 255 möglich. Eine Netzwerkadresse ist die erste Adresse in einem Netz, das auch ein Subnetz sein kann. Die Netzwerkadresse bezeichnet keinen Host in diesem Netz, sondern das ganze Netz. Es kann kein Netzelement geben, das diese Adresse hat.

Im folgenden wird beispielhaft von einer Netzwerkadresse von 10.1.1.0 für das - bezüglich seines Erstreckungsbereiches mit dem ersten virtuellen Netzwerk VLAN1 identischen - erste Subnetz ausgegangen, wobei der Hostanteil im Subnetz beispielsweise auf das letzte Oktett beschränkt ist, eine zugehörige Subnetzmaske demzufolge mit 255.255.255.0 anzugeben ist.

Im folgenden wird das erste virtuelle Netzwerk VLAN1 detaillierter dargestellt.

In einem konfigurierten Arbeitsmodus ist durch die Kommunikationseinrichtungen TP1 und TP3 ein virtuelles Netzwerk VLAN1 durch ein sogenanntes "Frame Tagging"-Verfahren definiert. Die Kommunikationseinrichtung TP1 tauscht im konfigurierten Arbeitsmodus hierzu mit dem Switch LSW Datenpakete aus, in welchen Ziel und Ursprung identifizierende MAC-Adressen ("Media Access Control") um eine 12-Bit-lange nach IEEE 802.1Q standardisierte Kennzeichnung ("Tag") bzw. Markierung erweitert ist. Diese Kennzeichnung bzw. Markierung enthält in diesem Fall die Identifikationsnummer des hierbei definierten VLANs und wird wegen des Echtzeitkommunikationscharakters der Kommunikationseinrichtung TP auch mit Voice VLAN ID ("VVID") bezeichnet. In einer allgemeinen Bezeichnung wird diese VLAN ID auch mit dem Begriff "Identifikationsnummer" benannt. Da im folgenden Ausführungsbeispiel virtuelle Netzwerke zur Strukturierung von Kommunikationsnetzwerken betrachtet werden, wird meist die Bezeichnung VVID verwendet.

Im Gegensatz zum Austausch markierter Datenpakete durch die Kommunikationseinrichtung tauscht das Rechensystem CMP2 nicht-gekennzeichnete bzw. nicht-markierte Datenpakete ("Untagged Frames") mit dem Switch LSW aus. Diese nicht-gekennzeichneten Datenpakete sind überwiegend einer reinen, nicht echtzeit-kritischen Datenkommunikation vorbehalten.

In einem Modus, in dem die Kommunikationseinrichtung TP1 noch nicht konfiguriert ist, hat diese keine Kenntnis über die in ihrem virtuellen Netzwerk VLAN1 für die paketorientierte Kommunikation zu verwendende VVID. Des weiteren wurde ihr noch keine im gesamten - nicht dargestellten - paketorientierten Netzwerk gültige Netzwerkadresse bzw. IP-Adresse ("Internet Protocol") zugewiesen. Ein solcher Modus tritt nicht nur ein, wenn die Kommunikationseinrichtung TP1 erstmalig in Betrieb genommen wird, sondern auch nach einem Neustart des Kommunikationseinrichtungssystems TP1 oder nach einem "Umstecken" der Kommunikationseinrichtung TP an einen der anderen Ports P1,P2,P3 des Switches LSW.

Ohne Kenntnis der gültigen VVID ist auch keine Anforderungsnachricht an einen - nicht dargestellten - IP-Adressenzuweisenden Rechner möglich, da der Switch LSW1 einerseits alle Datenpakete mit einer VVID ungleich der für das virtuelle Netzwerk VLAN1 vorgesehenen VVID verwirft und andererseits nicht-gekennzeichnete Datenpakete ohne eine VVID im Allgemeinen einer reinen Datenkommunikation vorbehalten sind.

Im folgenden wird zunächst ohne Bezug auf die Zeichnung eine IP-Adressenzuweisung anhand des Protokolls "DHCP" allgemein beschrieben.

Das DHCP-Frotokoll (Dynamic Host Configuration Protocol) ist ein Client-/Server-Protokoll, das die Vergabe von IP-Adressen handhabt. Das DHCP-Protokoll dient der dynamischen und automatischen Endgeräte-Konfiguration z.B. der Vergabe von IP-Adressen. Die entsprechenden IP-Adressen werden von den angeschlossenen DHCP-Clients bei einem DHCP-Server angefordert. Die Adressen werden einem Adresspool entnommen, der an dem DHCP-Server definiert ist. Bei der dynamischen Zuweisung wird an einen Client eine gültige IP-Adresse temporär für eine bestimmte Zeit vergeben. Wird die IP-Adresse vom Client nicht mehr benötigt, kann der Server wieder über diese verfügen und sie beispielsweise an einen anderen Client vergeben.

Das DHCP-Protokoll kennt mehrere Nachrichtentypen, mit denen der gesamte Informationsaustausch zwischen Client und Server gesteuert wird. Eine Anfragenachricht ("DHCP Discover") des Clients erfolgt mittels einer an das ganzen Netzwerk verschickten Nachricht ("Broadcast"), um das Netzwerk auf verschiedene DHCP-Server hin zu testen. Als Antwortnachricht ("DHCP Offer") verschickt der DHCP-Server eine Broadcastnachricht oder eine gerichtete Nachricht ("Unicast"), in der dem Client eine Konfiguration vorgeschlagen wird. Akzeptiert der DHCP-Client die angebotenen Konfigurationsparameter, sendet er mittels Broadcast eine Anforderungsnachricht ("DHCP-Request"). Darauf hin sendet der Server mittels einer Bestätigungsnachricht ("DHCP-Acknowledge") die IP-Adresse und/oder optional weitere Konfigurationsparameter. Wird die IP-Adresse vom Client nicht mehr benötigt, sendet dieser eine Freistellungsnachricht ("DHCP Release") an den Server. Bestimmte Nachrichten müssen sowohl server- als auch clientseitig als Broadcast verschickt werde, damit alle anderen Clients und Server über die Konfiguration informiert sind und nicht unnötig Adressen und Konfigurationen reservieren. Da bestimmte Netzknoteneinrichtungen ungerichtete Broadcast-Nachrichten generell nicht weiterleiten existieren auch "gerichtete" bzw. "Directed" Broadcast-Nachrichten. Für den Fall einer DHCP-Anforderungsnachricht trifft diese Nicht-Weiterleitung im Allgemeinen jedoch nicht zu.

Das DHCP-Verfahren in der bis jetzt beschriebenen Form erfordert einen DHCP-Server in jedem virtuellen Netzwerk, da ungerichtete Broadcast-Nachrichten im Allgemeinen nicht über VLAN-Grenzen hinweg transportiert werden. Das DHCP-Protokoll sieht aber eine optionale Weiterleitung der Broadcast-Nachrichten durch sogenannte DHCP-Relays vor. Somit benötigt jedes VLAN lediglich einen DHCP-Relay, der die Broadcast-Nachricht meist als gerichtete Nachricht an einen oder mehrere DHCP-Server weiterleitet. Der DHCP-Relay trägt dabei in die Nachricht die eigene Adresse des Ports ein, auf dem die Broadcast-Nachricht empfangen wurde. Der DHCP-Server entscheidet nun unter anderem aufgrund dieser Adresse, welche Informationen er zurückliefert. Oft wird diese Weiterleitungsfunktion von Routern übernommen.

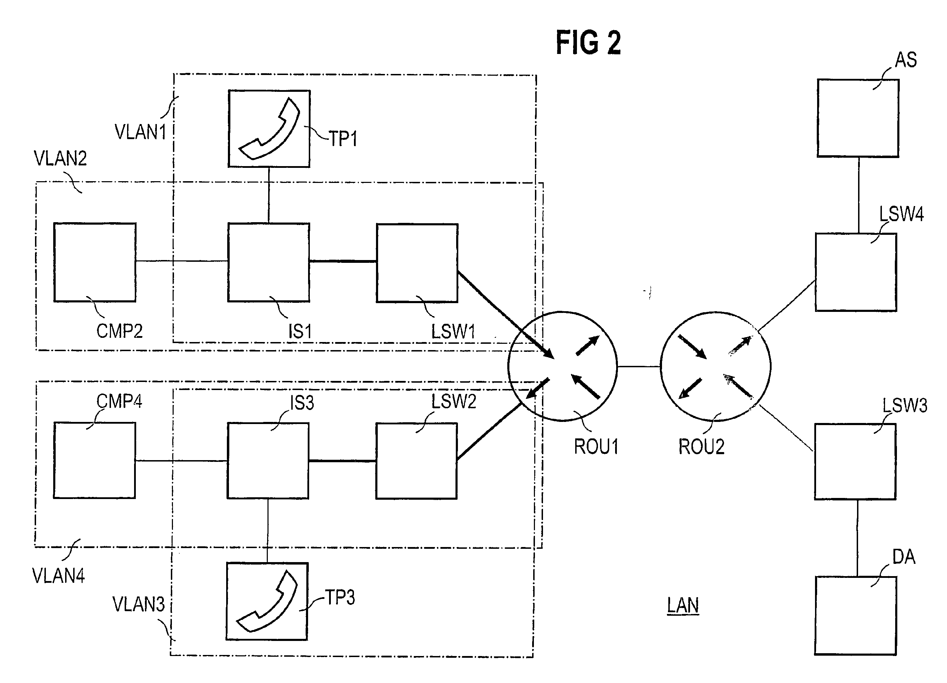

In Vorgriff auf die Beschreibung von Fig. 2 hat ein dortiger Router ROU1 zwei DHCP-Relay-Funktionen implementiert: eine auf einem virtuellen Port zu einem dortigen ersten virtuellen Netzwerk VLAN1 und eine auf einem virtuellen Port zu einem dortigen zweiten virtuellen Netzwerk VLAN2. Bei einer Weitergabe von unmarkierten ("untagged") DHCP-Nachrichten trägt er eine für das dortige zweite virtuelle Netzwerk VLAN2 gültige Adresse ein, während er vor einer Weitergabe von mit der für das erste virtuelle Netzwerk VLAN1 markierten ("tagged") DHCP-Nachrichten seine für das erste virtuelle Netzwerk VLAN1 gültige Adresse in einen Datenteil der DHCP-Nachricht einträgt.

Bevor die Kommunikationseinrichtung TP1 eine IP-Adresse beziehen kann, ist zunächst eine Konfiguration der VVID notwendig. Diese Konfiguration erfolgte bislang meist durch einen Servicetechniker, der die Einstellung der VVID an jeder Kommunikationseinrichtung eines - nicht dargestellten - Kommunikationssystems manuell vornahm.

Eine erste Strategie zur automatischen Konfiguration der Kommunikationseinrichtung TP1 besteht darin, die zuletzt verwendete, d.h. im virtuellen Netzwerk gültige VVID zu speichern. Bei einem erneuten Hochfahren der Kommunikationseinrichtung TP1, z.B. in Folge eines Stromausfalls, führt die Speicherung der vormaligen VVID zum Erfolg; die gespeicherte VVID wird für eine Anforderungsnachricht an einen - nicht dargestellten - DHCP-Server verwendet. Die Anforderungsnachricht wird vom Switch LSW durchgelassen und an den DHCP-Server weitergegeben, welcher für die Kommunikationseinrichtung TP1 eine Netzwerkadresse bzw. IP-Adresse reserviert und diese in einer Antwortnachricht an die Kommunikationseinrichtung TP1 mitteilt. Mit dieser Rückmeldung ist es an der Kommunikationseinrichtung TP1 wiederum möglich, die zuletzt gespeicherte VVID als die aktuell gültige VVID einzustellen, die automatische Konfiguration der VVID ist damit abgeschlossen.

Im Falle eines Umsteckens der Kommunikationseinrichtung TP1, beispielsweise vom ursprünglich vierten Port P4 auf den dritten Port P3 führt die oben beschriebene automatische Konfiguration anhand einer zuletzt gespeicherten VVID in bestimmten Situationen nicht zum Erfolg. Da an diesem dritten Port P3 z.B. ein - nicht dargestelltes - virtuelles Netzwerk unter Anwendung einer VVID mit einem unterschiedlichen Wert vorliegt, werden alle entsprechenden von der Kommunikationseinrichtung TP1 gesendeten Nachrichten mit einer dem ersten virtuellen Netzwerk VLAN1 zugeordneten VVID vom Switch LSW fallengelassen.

Durch das Fehlen einer Rückmeldung auf eine - im neuen virtuellen Netzwerk eine ungültige VVID enthaltende - Anforderungsnachricht an den - nicht dargestellten - DHCP-Server verbleibt als letzte Möglichkeit einer automatischen Konfiguration durch die Kommunikationseinrichtung TP1 ein Scan-Vorgang. Bei diesem Scan-Vorgang werden beispielsweise mehrere Anforderungsnachrichten mit einer jeweils inkrementierten VVID generiert, bis bei einer korrekten VVID die Anforderungsnachricht den Switch LSW passiert und eine Bestätigungsnachricht vom DHCP-Server an der Kommunikationseinrichtung erhalten wird. Bedingt durch eine Bitbreite von 12 für das VLAN-ID-Feld sind neben dem ungataggten VLAN und VLAN 0 insgesamt 4095 weitere verschiedene VVID zu scannen.

Das erste virtuelle Netzwerk VLAN1 kann - wie bereits angedeutet - in einer alternativen Ausführungsform über einen verbundenen - nicht dargestellten - Router mit mehreren Subnetzen belegt sein. Um alle Kommunikationsgeräte in dem ersten virtuellen Netzwerk VLAN1 automatisch zu konfigurieren, reicht es, nur eine Konfigurationsnachricht in eines der Subnetze des ersten virtuellen Netzwerks VLAN1 zu schicken. Damit werden alle Kommunikationsgeräte TP1,TP3 mit der richtigen VVID konfiguriert, auch wenn sie später vom DHCP-Server IP-Adressen aus verschiedenen Subnetzen zugewiesen bekommen.

Fig. 2 zeigt eine größere Übersicht des paketorientierten Netzwerks LAN.

In analoger Weise zum vorhergehenden Ausführungsbeispiel ist eine erste Kommunikationseinrichtung TP1 über einen zugeordneten internen Switch IS1 mit einem ersten Switch LSW1 verbunden. Von einer Darstellung einzelner Ports des ersten Switch LSW1 wird in Fig. 2 abgesehen. An die erste Kommunikationseinrichtung TP1 ist über den internen Switch IS1 ein erstes Rechensystem CMP2 angeschlossen. Die virtuellen Netzwerke VLAN1,VLAN2 haben wie vorher die selbe Ausdehnung wie die jeweils zugehörigen Subnetzwerke.Im Unterschied zur vereinfachenden Darstellung gemäß Fig. 1B sind die virtuellen Netzwerke VLAN1,VLAN2 bezüglich Ihrer Erstreckung korrekter über den ersten Switch LSW1 bis zu einem ersten Router ROU1 dargestellt.

In analoger Weise ist weitere Kommunikationseinrichtung TP3 über einen zugeordneten internen Switch IS3 mit einem zweiten Switch LSW2 verbunden. An die weitere Kommunikationseinrichtung TP3 ist über den internen Switch IS3 ein weiteres Rechensystem CMP4 angeschlossen. Die analog den vorgenannten virtuellen Netzwerke VLAN1,VLAN2 strukturierten virtuellen Netzwerke VLAN3,VLAN4 besitzen die selbe Ausdehnung wie die jeweils zugehörigen Subnetzwerke.

Der erste Router ROU1 sowie ein weiterer Router ROU2 ist in der Zeichnung mit einem Pfeile enthaltenden Kreis dargestellt, wobei die Richtung der Pfeile lediglich die Funktion der Router ROU1,ROU2 und nicht mit einer Richtungsvorgabe angeschlossener Netzwerkelemente gleichzusetzen ist. Der erste Router ROU1 ist mit dem zweiten Router ROU2 verbunden.

Die ein jeweiliges virtuelles Netzwerk VLAN1,VLAN2,VLAN3,VLAN4 symbolisierenden strichpunktierten Kästen ragen in die Darstellung des ersten Routers ROU1 hinein, um anzudeuten, dass eine jeweilige - nicht dargestellte - dieses ersten Routers ROU1 ein jeweiliges Subnetzwerk definiert bzw. verwaltet.

Mit dem zweiten Router ROU2 ist ein dritter und ein vierter Switch LSW3,LSW4 verbunden. An den dritten Switch LSW3 ist eine Discovery-Agent-Einheit DA angeschlossen, an den vierten Switch LSW4 ist ein Netzwerkadressenserver AS angeschlossen. Der Netzwerkadressenserver AS arbeitet beispielsweise gemäß des oben beschriebenen DHCP-Protokolls.

Ein Router ist ein Koppelelement, das Subnetze auf einer Vermittlungs- bzw. Ebene-3-Schicht miteinander verbindet. Für das nachfolgend zu beschreibende erfindungsgemäße Verfahren zur automatischen Konfiguration der WID einer Kommunikationseinrichtung TP1,TP2 besteht eine wesentliche Forderung darin, dass Konfigurationsnachrichten von einer zentralen Stelle außerhalb der virtuellen paketorientierten Netzwerke VLAN1,VLAN2, eventuell über mehrere Router ROU1,ROU2 hinweg an die Telekommunikationseinrichtung TP gesendet werden können.

Diese Übermittlung von Konfigurationsnachrichten erfolgt durch die Discovery-Agent-Einheit DA, die im Ausführunctsbeispiel beispielsweise als eigenständige Hard- und/oder Softwareeinheit vorliegt. In technischen Realisierungen dieser Discovery-Agent-Einheit DA wird diese alternativ als ein Prozess bzw. als eine Softwarelogik auf einer beliebigen mit dem Netzwerk LAN kommunizierenden Recheneinheit zur Ausführung gebracht.

Die Discovery-Agent-Einheit DA sendet periodisch in vorgebbaren Zeitintervallen, beispielsweise im Abstand von zehn Sekunden, Konfigurationsnachrichten aus. In einer Datenbank der Discovery-Agent-Einheit DA sind hierzu beispielsweise Datensätze vorhanden, in welchen Subnetzwerken Kommunikationseinrichtungen vorhanden sind, an die Konfigurationsnachrichten zu versenden sind.

Diese Konfigurationsnachrichten werden als gerichtete Broadcastnachrichten in die jeweiligen Subnetze gesendet und enthalten optional in einem Datenteil eine Information, dass der Empfänger dieser Nachricht sich in einem VoIP-Subnetz befindet und welche VLAN ID diese hat. Im übrigen sind an die weitere Struktur dieser Konfigurationsnachrichten keine besonderen Anforderungen gestellt, in der Praxis kann es sich um einfache sogenannte "Hello"-Nachrichten handeln.

Über den zweiten Router ROU2 sowie über eventuell dazwischen angeordnete - nicht dargestellte - weitere Router erreichen diese Nachrichten schließlich den ersten Router ROU1, der die Subnetze an seinen - nicht dargestellten - virtuellen VLAN-Ports zum ersten bzw. zweiten Switch LSW1,LSW2 konfiguriert hat.

An dem die Subnetze verwaltenden ersten Router ROU1 wird der Directed-Broadcast-Charakter der Konfigurationsnachricht in einen direkten für die Subnetze gültigen Broadcast umgesetzt. Ein Directed Broadcast in das erste - im Ausführungsbeispiel sich mit dem ersten virtuellen Netzwerk VLAN1 überdeckende - Subnetz mit der Zieladresse 10.1.1.255 wird z.B. durch eine Zieladresse mit dem Wert 255.255.255.255 umgesetzt und auf den Port des ersten Routers ROU1 in Richtung des ersten Switch LSW1 übergeben. Gleichzeitig wird die Identifikationsnummer des virtuellen Netzwerks VLAN1 als 802.1Q-Tag in einen Header der so aus der Konfigurationsnachricht in eine für das erste Subnetzwerk umgewertete Rundrufnachricht (Broadcast) eingesetzt, wenn es sich bei dem ersten virtuellen Netzwerk VLAN1 nicht um das "native VLAN" des ausgehenden Ports handelt.

Aus dem Tag-Eintrag dieser Konfigurationsnachrichten kann die erste Kommunikationseinrichtung TP1 die dem virtuellen paketorientierten Netzwerk VLAN1 entsprechende VVID auslesen. Optional ist diese VVID auch zusätzlich in einem Datenteil der ursprünglich von der Discovery-Agent-Einheit gesendeten Konfigurationsnachricht enthalten, da diese dort oftmals einfacher auszulesen ist.

Durch die Umwertung der Konfigurationsnachricht mit einer gültigen VVID durch den ersten Router ROU1 ist gewährleistet, dass ausschließlich Konfigurationsnachrichten mit der für den jeweiligen virtuellen Netzwerks VLAN1,VLAN2 gültigen VVID vom jeweiligen Switch LSW1,LSW2 an die jeweilige Kommunikationseinrichtung TP1,TP2 übergeben werden. Der erste Router ROU1 muss im übrigen nicht speziell ausgestaltet werden, da diese Umwertung eine übliche Operation für Router ist.

Die Discovery-Agent-Einheit DA enthält zur Übersendung von Konfigurationsnachrichten beispielsweise eine Tabelle, in der eine das jeweilige Subnetzwerk eines jeweiligen virtuellen Netzwerks VLAN1,VLAN2 adressierende Information gespeichert ist. Diese adressierende Information liegt beispielsweise in Form der Netzwerkadresse und Netzwerkmaske des jeweiligen Subnetzwerkes vor. Alternativ zur Speicherung einer Netzwerkadresse und Netzwerkmaske ist in der Tabelle der Discovery-Agent-Einheit DA eine Directed Broadcast-Adresse gespeichert.Eine zusätzliche Speicherung der in dem jeweiligen virtuellen Netzwerk VLAN1,VLAN2 gültigen VVID kann sinnvoll sein, ist aber für eine erfolgreiche Konfiguration nicht notwendig, da - wie bereits erwähnt -die VVID in Form der Identifikationsnummer vom ersten Router ROU1 zugewiesen wird.

## Patentansprüche

1. Verfahren zur automatischen Konfiguration einer Kommunikationseinrichtung (TP1) mit einer vorbehaltenen Identifikationsnummer, mit
- mindestens einer Netzknoteneinrichtung (ROU1), durch die ein zugeordnetes Subnetzwerk eines Netzwerks (LAN) verwaltet wird,
- mindestens einem mindestens ein Subnetzwerk umfassendes virtuelles Netzwerk (VLAN1), dem die Kommunikationseinrichtung (TP1) zugeordnet ist, wobei innerhalb des virtuellen Netzwerks (VLAN1) ausgetauschte Datenpakete mit einer VLAN-Identifikationsnummer markiert sind,
umfassend folgende Schritte:
- Ermittlung einer das Subnetzwerk adressierenden Information durch ein im Netzwerk (LAN) angeordnetes Netzelement (DA),
- Übersendung einer mit der das Subnetzwerk adressierenden Information eingestellten Konfigurationsnachricht vom Netzelement (DA) an die Netzknoteneinrichtung (ROU1),
- Weiterleitung der Konfigurationsnachricht von der Netzknoteneinrichtung (ROU1) als eine mit der VLAN- Identifikationsnummer markierten Rundrufnachricht an das virtuelle Netzwerk (VLAN1),
- Empfang der Rundrufnachricht durch die Kommunikationseinrichtung (TP1) und Konfiguration der Kommunikationseinrichtung (TP1) anhand der VLAN-Identifikationsnummer.

2. Verfahren nach Anspruch 1,
**dadurch gekennzeichnet,**
**dass** die Netzknoteneinrichtung (ROU1) als Router ausgestaltet ist.

3. Verfahren nach einem der Ansprüche 1 oder 2,
**dadurch gekennzeichnet,**
**dass** die das Subnetzwerk adressierende Information als Directed-Broadcast-Adresse vorliegt.

4. Verfahren nach einem der Ansprüche 1 oder 2,
**dadurch gekennzeichnet,**
**dass** die das Subnetzwerk adressierende Information als Netzwerkadresse und Netzwerkmaske vorliegt.

5. Verfahren nach einem der vorhergehenden Ansprüche,
**dadurch gekennzeichnet,**
**dass** zwischen der Netzknoteneinrichtung (ROU1) und dem von der Netzknoteneinrichtung (ROU1) verwalteten Subnetzwerk eine Schicht-2-Netzknoteneinrichtung (LSW1) angeordnet ist.

6. Verfahren nach Anspruch 5,
**dadurch gekennzeichnet,**
**dass** von im Subnetzwerk angeordneten Netzelementen (TP1) gesendete Datenpakete über die Schicht-2-Netzknoteneinrichtung (LSW1) nur dann weitergeleitet werden, wenn die Datenpakete
- mit der vorbehaltenen Identifikationsnummer markiert sind, oder,
- keine Markierung aufweisen.

7. Verfahren nach einem der Ansprüche 5 oder 6,
**dadurch gekennzeichnet,**
**dass** die Schicht-2-Netzknoteneinrichtung (LSW1) mehrere Anschlusseinheiten (P1,P2,P3,P4) zur Definition mehrerer virtuellen Netzwerke (VLAN1) mit jeweils zugeordneten Identifikationsnummern aufweist.

8. Verfahren nach einem der vorhergehenden Ansprüche,
**dadurch gekennzeichnet,**
**dass** die Identifikationsnummer in einem Protokollkopf der Rundrufnachricht gemäß des IEEE 802.1Q-Standards eingetragen wird.

9. Verfahren nach einem der vorhergehenden Ansprüche,
**dadurch gekennzeichnet,**
**dass** die Identifikationsnummer in einem Datenteil der vom Netzelement (DA) erzeugten Konfigurationsnachricht eingetragen wird.

10. Verfahren nach einem der vorhergehenden Ansprüche,
**dadurch gekennzeichnet,**
**dass** die Konfigurationsnachricht in periodischen Zeitabständen gesendet wird.

11. Verfahren nach einem der vorhergehenden Ansprüche,
**dadurch gekennzeichnet,**
**dass** bei einem Ausfall des Netzelements (DA) von der Kommunikationseinrichtung (TP1) eine Nachricht mit einer Markierungsnummer an ein zweites Netzelement (AS) gesendet wird, wobei
- im Fall dass vom zweiten Netzelement (AS) keine Antwortnachricht empfangen wird, der Sendevorgang durch die Kommunikationseinrichtung (TP1) mit einer veränderten Markierungsnummer wiederholt wird, und,
- im Fall dass vom zweiten Netzelement (AS) eine Antwortnachricht empfangen wird, die Markierungsnummer als Identifikationsnummer verwendet wird.

12. Verfahren nach einem der vorhergehenden Ansprüche,
**dadurch gekennzeichnet,**
**dass** die Identifikationsnummer zur Konfiguration einer das virtuelle Netzwerk (VLAN1) charakterisierenden VLAN ID in der Kommunikationseinrichtung (TP1) verwendet wird.

## Claims

1. Method for the automatic configuration of a communications device (TP1) with a reserved identification number, with
- at least one network node device (ROU1), by which a subnetwork of a network (LAN) is administered,
- at least one virtual network (VLAN1), comprising at least one subnetwork, to which the communications device (TP1) is assigned, with data packets exchanged within the virtual network (VLAN1) being tagged with the reserved identification number,
comprising the following steps:
- Determination of information addressing the subnetwork by a network element (DA) arranged in the network (LAN),
- Transfer of a set configuration message with the information addressing the subnetwork from the network element (DA) to the network node device (ROU1),
- Forwarding to the virtual network (VLAN1) of the configuration message from the network node device (ROU1) as a broadcast message tagged with the reserved identification number,
- Receipt of the broadcast message by a communications device (TP1) and configuration of the communications device (TP1) on the basis of the identification number.

2. Method in accordance with claim 1,
**characterized in that**
the network node device (ROU1) is embodied as a router.

3. Method in accordance with one of the claims 1 or 2,
**characterized in that**
the information addressing the subnetwork is present as a directed broadcast address.

4. Method in accordance with one of the claims 1 or 2,
**characterized in that**,
the information addressing the subnetwork is present as network address and network mask.

5. Method in accordance with one of the previous claims
**characterized in that**,
a layer-2 network node device (LSW1)is arranged between the network node device (ROU1) and the subnetwork administered by the network node device (ROU1).

6. Method in accordance with claim 5,
**characterized in that**,
data packets sent by the network elements (TP1) arranged in the subnetwork are only forwarded via the layer-2 network node device (LSW1) if the data packets
- are tagged with the reserved identification number,
or
- are untagged.

7. Method in accordance with one of the claims 5 or 6,
**characterized in that**,
the layer-2 network node device (LSW1) features a number of access units (P1, P2, P3, P4) for definition of a number of virtual networks (VLAN1) each with assigned identification numbers.

8. Method in accordance with one of the previous claims
**characterized in that**,
the identification number is entered in a protocol header of the broadcast message in accordance with the IEEE 802.1Q Standard.

9. Method in accordance with one of the previous claims
**characterized in that**,
the identification number is entered into a data part of the configuration message created by the network element (DA).

10. Method in accordance with one of the previous claims
**characterized in that**,
the configuration message is sent at intervals.

11. Method in accordance with one of the previous claims
**characterized in that**,
on failure of the network element (DA) of the communications device (TP1) a message is sent with a tag number to a second network element (AS), whereby
- in the case of no response message being received by the second network element (AS), the send process is repeated by the communications device (TP1) with a changed tag number, and,
- in the case in which a response message is received by the second network element (AS), the tag number is used as the identification number.

12. Method in accordance with one of the previous claims
**characterized in that**,
the identification number is used in the communications device (TP1) for configuration of a VLAN ID characterizing the virtual network (VLAN1).

## Revendications

1. Procédé pour la configuration automatique d'un dispositif de communication (TP1) avec un numéro d'identification réservé, comprenant
- au moins un dispositif de noeud de réseau (ROU1) par lequel un sous-réseau attribué d'un réseau (LAN) est géré,
- au moins un réseau virtuel (VLAN1), comprenant au moins un sous-réseau, auquel est attribué le dispositif de communication (TP1), des paquets de données échangées à l'intérieur du réseau virtuel (VLAN1) étant marqués avec un numéro d'identification de VLAN,
comprenant les étapes suivantes :
- détermination d'une information adressant le sous-réseau par un élément de réseau (DA) disposé dans le réseau (LAN),
- transmission d'un message de configuration réglé avec l'information adressant le sous-réseau de l'élément de réseau (DA) au dispositif de noeud de réseau (ROU1),
- transmission du message de configuration par le dispositif de noeud de réseau (ROU1) sous la forme d'un message de diffusion marqué avec le numéro d'identification VLAN au réseau virtuel (VLAN1),
- réception du message de diffusion par le dispositif de communication (TP1) et configuration du dispositif de communication (TP1) à l'aide du numéro d'identification VLAN.

2. Procédé selon la revendication 1,
**caractérisé en ce que**
le dispositif de noeud de réseau (ROU1) est conçu comme routeur.

3. Procédé selon l'une quelconque des revendications 1 ou 2,
**caractérisé en ce que**
l'information adressant le sous-réseau est présente sous la forme d'adresse Directed-Broadcast.

4. Procédé selon l'une quelconque des revendications 1 ou 2,
**caractérisé en ce que**
l'information adressant le sous-réseau est présente sous la forme d'adresse de réseau et de masque de réseau.

5. Procédé selon l'une quelconque des revendications précédentes,
**caractérisé en ce que**
un dispositif de noeud de réseau de couche 2 (LSW1) est disposé entre le dispositif de noeud de réseau (ROU1) et le sous-réseau géré par le dispositif de noeud de réseau (ROU1).

6. Procédé selon la revendication 5,
**caractérisé en ce que**
des paquets de données envoyés par des éléments de réseau (TP1) disposés dans le sous-réseau sont transmis par le dispositif de noeud de réseau de couche 2 (LSW1) uniquement dans les cas où les paquets de données
- sont marqués avec le numéro d'identification réservé ou
- ne présentent pas de marquage.

7. Procédé selon l'une quelconque des revendications 5 ou 6,
**caractérisé en ce que**
le dispositif de noeud de réseau de couche 2 (LSW1) présente plusieurs unités de raccordement (P1, P2, P3, P4) pour la définition de plusieurs réseaux virtuels (VLAN1) avec des numéros d'identification respectivement attribués.

8. Procédé selon l'une quelconque des revendications précédentes,
**caractérisé en ce que**
le numéro d'identification est inscrit dans un en-tête de protocole du message de diffusion selon le standard IEEE 802.1Q.

9. Procédé selon l'une quelconque des revendications précédentes,
**caractérisé en ce que**
le numéro d'identification est inscrit dans une partie de données du message de configuration généré par l'élément de réseau (DA).

10. Procédé selon l'une quelconque des revendications précédentes,
**caractérisé en ce que**
le message de configuration est envoyé à des intervalles de temps périodiques.

11. Procédé selon l'une quelconque des revendications précédentes,
**caractérisé en ce que**,
dans le cas d'une défaillance de l'élément de réseau (DA), le dispositif de communication (TP1) envoie un message avec un numéro de marquage à un second élément de réseau (AS),
- l'opération d'émission étant répétée par le dispositif de communication (TP1) avec un numéro de marquage modifié dans le cas où on ne reçoit pas de message de réponse du second élément de réseau (AS),, et
- le numéro de marquage étant utilisé comme numéro d'identification dans le cas où on reçoit un message de réponse du second élément de réseau (AS).

12. Procédé selon l'une quelconque des revendications précédentes,
**caractérisé en ce que**
le numéro d'identification est utilisé pour la configuration d'un VLAN ID caractérisant le réseau virtuel (VLAN1) dans le dispositif de communication (TP1).
